# EUROPEAN PATENT APPLICATION

(11) **EP 4 644 262 A1**
(43) Date of publication of application: **05.11.2025**
(21) Application number: 22970054.7
(22) Date of filing: 27.12.2022
(51) Int. Cl.: B64U 10/13, B64U 101/40

(54) **WORK-PERFORMING AERIAL VEHICLE**

(71) Applicant: Kubota Corporation, Osaka 556-8601 (JP)
(72) Inventor: SAKAGUCHI, Kazuo, Sakai-shi, Osaka 590-0908 (JP); KONDO, Kanako, Sakai-shi, Osaka 590-0908 (JP)
(74) Representative: Cabinet Beau de Loménie
(86) International application number: PCT/JP2022/048216
(87) International publication number: WO 2024/142260

(57) **Abstract**

A working aerial vehicle 1 according to the present invention includes the ejection device 3 including a biasing unit configured to bias a material and a guide unit 32 configured to guide the material biased by the biasing unit in an ejection direction

## Description

### Technical Field

The present invention relates to a working aerial vehicle.

### Background Art

Aerial spraying is mentioned as one of methods that can improve the efficiency of seeding work and the like, and various techniques related to this have been proposed.

For example, PCT Japanese Translation Patent Publication No. JP2020-508925 (Patent Literature 1) discloses an aerial spraying method including a step of acquiring the wind speed of wind that causes drift dispersal of a sprayed material sprayed from an unmanned aerial vehicle (UAV), and a step of controlling one or a plurality of components of the UAV based on the acquired wind speed to at least reduce the drift dispersal.

Japanese Patent Application Laid-Open No. 2012-521989 (Patent Literature 2) discloses a composition including at least one coating including at least one seed and at least one wetting agent, as seed Suitable for aerial spraying.

Japanese Patent Application Laid-Open No. 2012-70681 (Patent Literature 3) discloses a vegetation bag for aerial seeding greening, which is aerially sprayed to capture flying seeds and green a greening target area, the vegetation bag including a vegetation base material and a bag body filled with the vegetation base material, in which a plan view shape of the vegetation bag is molded in an annular shape.

### Citation List

### Patent Literature

Patent Literature 1: PCT Japanese Translation Patent Publication No. 2020-508925(or International Publication No. 2018/157393)
Patent Literature 2: Japanese Patent Application Laid-Open No. 2012-521989 (or International Publication No. 2010/111309)
Patent Literature 3: Japanese Patent Application Laid-Open No. 2012-70681

### Summary of Invention

### Technical Problem

In the aerial spraying technique in the related art, there is a case where a material sprayed from the air cannot be retained at an intended place. In addition, it was difficult to control the dispersion state of the material on the ground surface. Therefore, for example, it was difficult to realize a state in which crops were arranged in an orderly manner in the field.

In view of the above-described problems, there is a demand for realization of a working aerial vehicle in which a dispersion state of a material on the ground surface is easily controlled.

### Solution to Problem

A working aerial vehicle according to the present invention includes an ejection device including at least one biasing unit configured to bias a material and at least one guide unit configured to guide the material biased by the at least one biasing unit in an ejection direction below an airframe, in which the ejection direction is changeable.

According to this configuration, since the material can be ejected to a desired location, it is easy to control a dispersion state of the material on the ground surface.

Hereinafter, preferred aspects of the present invention will be described. However, the scope of the present invention is not limited to the following preferred aspect examples.

In the working aerial vehicle according to the present invention, as one aspect, it is preferable that the at least one guide unit may be swingable.

According to this configuration, it is particularly easy to aim at an ejection destination of the material. In addition, the material can be ejected in various directions by a single guide unit.

In the working aerial vehicle according to the present invention, as one aspect, it is preferable that the at least one biasing unit may include a plurality of biasing units, the at least one guide unit may include a plurality of guide units, and the ejection device may include the plurality of biasing units and the plurality of guide units and that each of the plurality of guide units may be independently swingable.

According to this configuration, a plurality of materials can be simultaneously ejected to a desired location.

In the working aerial vehicle according to the present invention, as one aspect, it is preferable that the at least biasing unit may include a plurality of biasing units and the ejection device may include a plurality of biasing units and that the ejection device may be allowed to independently control operations of the plurality of biasing units.

According to this configuration, a plurality of materials can be ejected simultaneously. In addition, since the number of materials to be ejected can be optionally changed according to the situation of the ejection destination, it is easy to use the materials effectively.

In the working aerial vehicle according to the present invention, as one aspect, it is preferable that the at least one guide unit includes a plurality of guide units and the ejection device may include the plurality of guide units having different directions in which the material is guided.

According to this configuration, since it is not necessary to provide a movable portion in the at least one guide unit, it is easy to determine the aiming of the ejection destination.

In the working aerial vehicle according to the present invention, as one aspect, it is preferable that the ejection device may be changeable between a storage posture in which the at least one guide unit is stored and a deployed posture in which the at least one guide unit is deployed.

According to this configuration, since the storage posture is taken in a case where the material does not need to be ejected, the air resistance is relatively small. Therefore, the flight of the working aerial vehicle is easily controlled.

As one aspect, it is preferable that the working aerial vehicle according to the present invention may further include a rotor configured to generate lift, and the working aerial vehicle may specify a degree of downwash generated by the rotor and determine at least one of the ejection direction and an ejection speed of the material in consideration of the degree of downwash.

According to this configuration, since the ejected material is easily buried in the ejection destination, the material is easily held at the ejection destination.

As one aspect, it is preferable that the working aerial vehicle according to the present invention may further include an aerial vehicle separate from the ejection device, and the ejection device is connected to the aerial vehicle.

According to this configuration, an aerial vehicle portion can be generalized and can be shared with other works.

As one aspect, it is preferable that the working aerial vehicle according to the present invention may further include a storage unit configured to store the material and supply the material to the ejection device.

According to this configuration, since the frequency of supplying the material can be reduced, the work efficiency is easily improved.

In the working aerial vehicle according to the present invention, as one aspect, it is preferable that the at least one guide unit may include a plurality of guide units and that ejection directions of each material from the plurality of guide units may be controllable to be substantially parallel.

According to this configuration, since the materials are easily aligned, it is easy to perform work such as a plurality of rows of seeding.

As one aspect, it is preferable that the working aerial vehicle according to the present invention may specify a range that is a region in which a landing speed of the material is equal to or higher than a predetermined threshold value, and control a path such that a point at which the material is to be landed is included in the range.

According to this configuration, it is easy to land the material in an appropriate state.

In the working aerial vehicle according to the present invention, as one aspect, it is preferable that the material may be an agricultural material.

According to this configuration, the working aerial vehicle according to the embodiment of the present invention can be preferably used for the work of supplying agricultural materials such as seeds, seedlings, fertilizers, chemicals, water, and soil to a field.

Further features and advantages of the present invention will be apparent from the following exemplary and non-limited description of embodiments with reference to the accompanying drawings.

### Brief Description of Drawings

Fig. 1 is a schematic diagram of a working aerial vehicle according to a first embodiment;
Fig. 2 is a functional configuration diagram of an ejection device according to the first embodiment;
Fig. 3 is a diagram illustrating an ejection method in the working aerial vehicle according to the first embodiment;
Fig. 4 is a functional configuration diagram of a modification example of the ejection device according to the first embodiment;
Fig. 5 is a schematic diagram of a working aerial vehicle according to a second embodiment; and
Fig. 6 is a functional configuration diagram of an ejection device according to the second embodiment.

### Description of Embodiments

Embodiment of a working aerial vehicle according to the present invention will be described with reference to the drawings. In the following, an example in which the working aerial vehicle according to the present invention is applied to a working aerial vehicle 1 that performs seeding will be described.

### [First Embodiment]

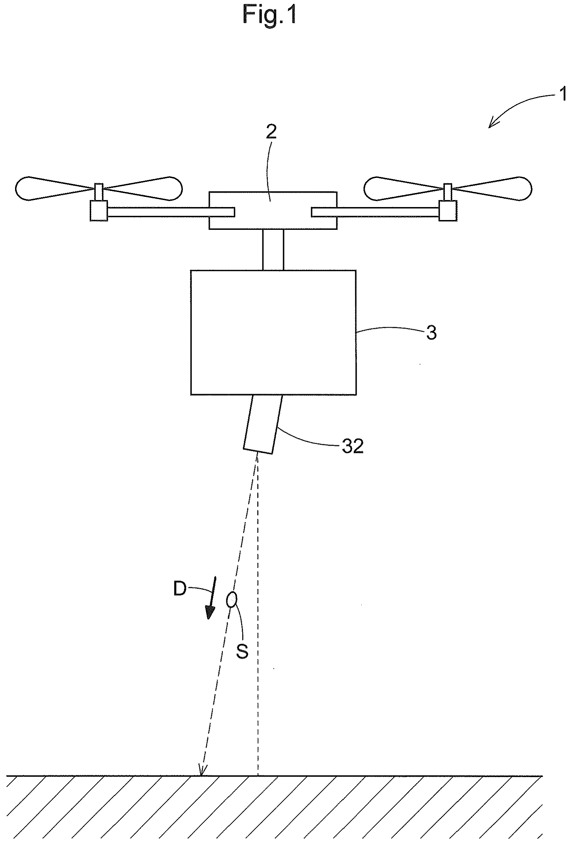

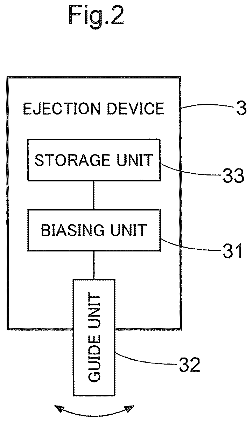

The working aerial vehicle 1 according to the first embodiment includes an aerial vehicle 2 and an ejection device 3, and the ejection device 3 includes a biasing unit 31, a guide unit 32, and a storage unit 33 (Figs. 1 and 2). The aerial vehicle 2 and the ejection device 3 are separate bodies, and the ejection device 3 is attachably and detachably connected to the aerial vehicle 2. The working aerial vehicle 1 is generally a device that ejects a seed S (an example of a material and an example of an agricultural material) stored in the storage unit 33 from the air toward a field.

The biasing unit 31 is a device that ejects the seed S toward the field. The biasing unit 31 is preferably driven to impart sufficient kinetic energy to the seed S so that the ejected seed S can be buried in the field, and the mechanism, output, and the like of the biasing unit 31 are selected to realize this function.

In particular, it is preferable that at least one of the ejection direction and the ejection speed of the seed S is determined in consideration of the degree of downwash generated by a rotor of the aerial vehicle 2. The ejection speed herein refers to a speed at the moment when the seed S is ejected from the ejection device 3. Preferably, the path of the seed S can be changed due to the influence of the downwash, and the seed S is ejected at an ejection speed exceeding a certain level, whereby the path of the seed S is suppressed to a level at which the influence of the downwash can be at least ignored. In addition, the ejection speed may also be determined in consideration of the dimension, the mass, and the like of the seed S as well as the wind direction, the wind speed, and the like around the working aerial vehicle 1. The control of the ejection speed can be realized by controlling the output of the biasing unit 31.

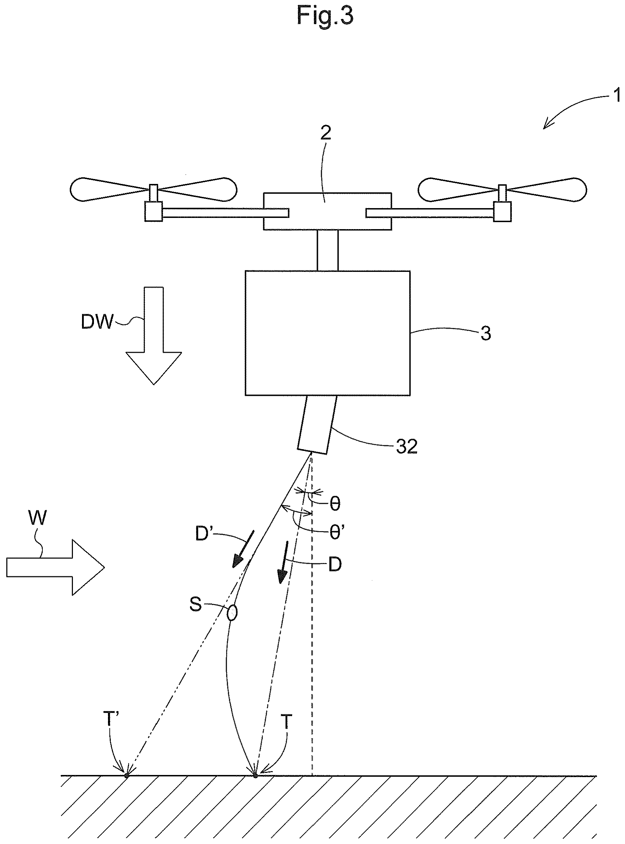

An example in which the influence of downwash and wind is considered is illustrated in Fig. 3. In the situation illustrated in Fig. 3, the seed S ejected from the ejection device 3 receives a downward force due to downwash DW and a rightward force on the paper due to the wind W. Due to these influences, the path of the seed S is changed. Therefore, in a case where the seed S is ejected in an ejection direction D (ejection angle θ) that linearly approaches a target point T, the seed S lands on a position (in the example of Fig. 3, a position deviated to the right direction of the paper) deviated from the target point T. Thus, taking into consideration the direction and the degree of the downwash DW and the wind W, a virtual target point T' is calculated such that a destination point by the path changed due to theses influences is the target point T, and the seed S is ejected in an ejection direction D' (ejection angle θ') that linearly faces the virtual target point T'.

Examples of a specific mounting form of the biasing unit 31 include a mechanical device that ejects the seed S by a gear rotating at a high speed, a pressurization type device that ejects the seed S using a compressed fluid (for example, compressed air), and the like.

The guide unit 32 is a nozzle-shaped member that guides the seed S biased by the biasing unit 31. The biased seed S passes through a tubular guide unit 32, is guided in the ejection direction D below the airframe of the working aerial vehicle 1, and is ejected to the field.

The purpose of ejecting the seed S by the working aerial vehicle 1 is to control a landing point of the seed S. That is, in a case where the seed S is simply dropped from a high place, it is difficult to land the seed S at a target position due to the influence of the wind. However, in the working aerial vehicle 1 according to the first embodiment, the seed S is biased and ejected, so that the seed S is easily landed at the target position. In order to achieve this object, the ejection direction D of the seed S is directed downward of the airframe of the working aerial vehicle 1 (Fig. 1).

In addition, from the viewpoint of controlling the landing point of the seed S, it is preferable to control the positional relationship between the working aerial vehicle 1 and the landing point such that the landing speed of the seed S is equal to or higher than a certain level. Specifically, first, a region where the landing speed of the seed S is equal to or higher than a predetermined threshold value is determined in consideration of elements such as the output of the ejection device 3, the dimensions and mass of the seed S, the wind direction and wind speed around the working aerial vehicle 1, and the influence of the downwash, and is specified as the range of the ejection device 3. Next, it is determined whether or not a point (landing point) where the seed S is to be landed is included in the specified range. Here, in a case where the landing point is included in the range, the ejection of the seed S is executed. On the other hand, in a case where the landing point is not included in the range, the path of the working aerial vehicle 1 is controlled such that the landing point is included in the range.

In the first embodiment, the guide unit 32 is swingable. That is, the orientation of the guide unit 32, which is a nozzle-shaped member, can be changed by any drive device (not illustrated) such as an electric drive or a hydraulic drive. Accordingly, the ejection direction D of the seed S can be changed.

In addition, the ejection device 3 can change the posture between a storage posture in which the guide unit 32 is stored and a deployed posture in which the guide unit 32 is deployed. In the storage posture, since the air resistance is relatively small, it is easy to control the flight of the working aerial vehicle 1. In the deployed posture, the seed S can be ejected. The specific configuration of the guide unit 32 that can realize the posture change is not particularly limited, and the guide unit 32 can change the posture by a movement selected from extension/retraction, bending, swinging, and the like.

The storage unit 33 is a container-shaped member that stores the seed S and supplies the seed S to the ejection device 3. The configuration of the storage unit 33 is appropriately selected depending on the properties, shape, and the like of the seed S to be used.

As the seed S, a seed of an agricultural crop may be used as it is, or a seed obtained by subjecting an agricultural crop collected from the seed to some processing may be used. The processing performed here includes, in addition to processing in the related art, such as the processing of adding a coating for preventing seeds from being eaten by birds or beasts or the processing in which seeds are accompanied by chemicals for preventing diseases of crops or fertilizers or nutrients for promoting germination, unique processing for facilitating the seeding using the working aerial vehicle 1 according to the present embodiment, such as the processing of adding a coating for preventing the seed S from being damaged by an impact due to ejection and the processing of adding a coating (spherical shape, cylindrical shape, or the like) for enhancing the directionality of the ejected seed S. In addition, the seed S in which a plurality of types of processing is performed simultaneously or sequentially may be used. In addition, a seed that has been processed in advance may be used as the seed S, or some processing may be performed in the storage unit 33.

### (Modification Example)

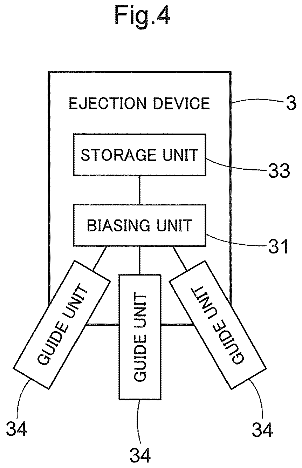

In the present embodiment, means for making the ejection direction D changeable is not limited to a configuration in which the guide unit 32 is swingable. For example, instead of the guide unit 32, a plurality of guide units 34 having different directions in which the seed S is guided may be provided, and the ejection direction D may be changed by selectively using the guide units 34 (Fig. 4). In this case, a configuration in which each guide unit 34 cannot swing may be adopted. In addition, even in this case, a configuration in which each of the guide units 32 and 34 can change the posture between the storage posture and the deployed posture is not hindered.

### [Second Embodiment]

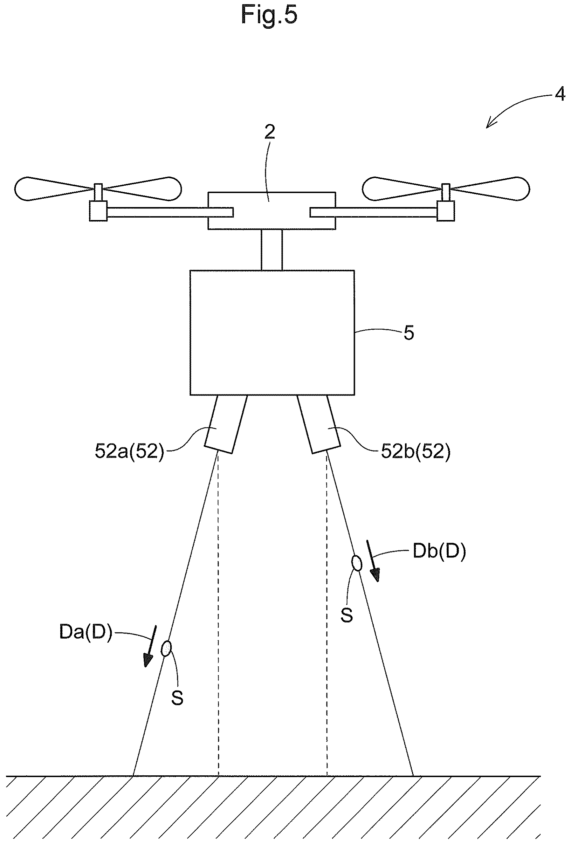

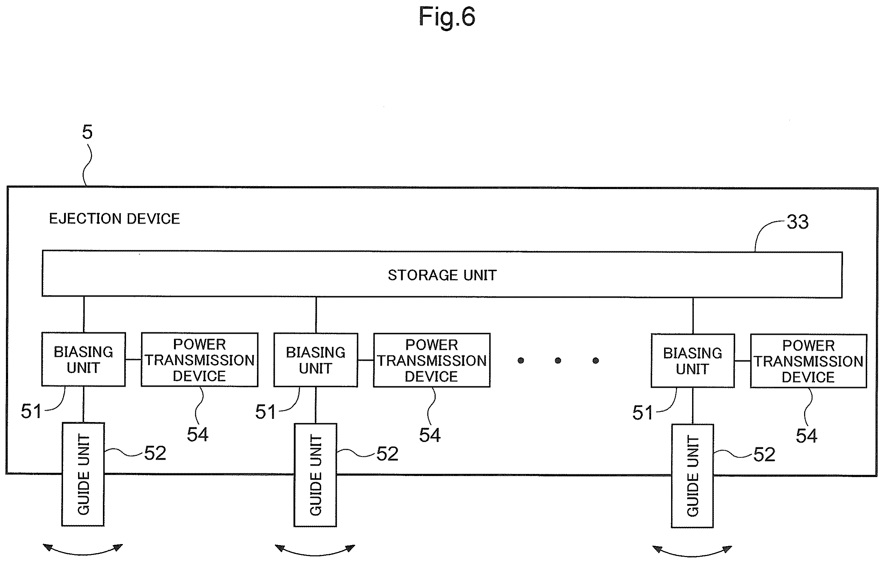

Next, a second embodiment of the present invention will be described. The same components as those in the first embodiment are denoted by the same reference numerals, and the description thereof will be omitted or simplified. A working aerial vehicle 4 according to the second embodiment includes the aerial vehicle 2 and an ejection device 5, and the ejection device 5 includes a biasing unit 51, a guide unit 52, and a storage unit 53 (Figs. 5 and 6).

In the ejection device 5 according to the second embodiment, a plurality of biasing units 51 are provided, and one guide unit 52 is connected to each of the biasing units 51. The plurality of guide units 52 can swing independently of each other, whereby the ejection direction D of the seed S ejected from the plurality of sets of biasing units 51 and guide units 52 can be changed independently of each other. Fig. 4 illustrates two guide units 52a and 52b representatively and illustrates a state in which the seed S are ejected in different ejection directions Da and Db.

In addition, the ejection directions D (Da, Db) of the seed S ejected from the plurality of sets of biasing units 51 and guide units 52 may be controlled to be substantially parallel. In this case, since the seed S is easily aligned, it is easy to perform work such as a plurality of rows of seeding. The ejection of the plurality of seeds S in a substantially parallel manner can be realized as long as at least a plurality of guide units are provided.

The storage unit 53 is common to the plurality of sets of biasing units 51 and guide units 52. That is, the seed S is supplied to and ejected from each biasing unit 51 from the single storage unit 53. The storage unit 53 may be provided for each set of the biasing unit 51 and the guide unit 52. In this case, it is easy to avoid the bridge in the storage unit 53.

The power for the plurality of biasing units 51 is supplied from a drive device (not illustrated) of the aerial vehicle 2 via a power transmission device 54. The power transmission device 54 is provided for each of the plurality of biasing units 51 and can independently select a connection state and a separation state. Accordingly, the operation of each of the plurality of biasing units 51 can be independently controlled.

Other configurations of the biasing unit 51, the guide unit 52, and the storage unit 53 are the same as the configurations of the biasing unit 31, the guide unit 32, and the storage unit 33 in the first embodiment, respectively.

With the working aerial vehicle 4 according to the second embodiment, a plurality of seeds S can be ejected simultaneously in different directions. Accordingly, a plurality of rows of seeding work can be performed simultaneously. In addition, since the operations of the plurality of biasing units 51 can be independently controlled, for example, operations are allowed, such as driving all the biasing units 51 at a central portion of the field to perform the seeding work with a maximum number of rows and stopping some of the biasing units 51 at an end portion of the field to prevent the seed S from being ejected out of the field.

### [Other Embodiments]

Finally, other embodiments of the working aerial vehicle according to the present invention will be described. The configurations disclosed in each of the following embodiments can also be applied in combination with the configurations disclosed in other embodiments as long as no contradiction occurs.

In each of the above-described embodiments, the configuration in which the seed S is ejected has been described as an example, but the material ejected by the working aerial vehicle according to the present invention is not limited to the seed. Agricultural materials such as seeds, seedlings, fertilizers, chemicals, water, and soil are preferable. In addition, the working aerial vehicle according to the present invention may be used to eject air or the like to frighten birds and beasts to exterminate the birds and beasts.

In the first embodiment described above, a configuration in which the ejection device 3 can change the posture between the storage posture and the deployed posture has been described as an example. However, in the working aerial vehicle according to the present invention, the ejection device may not be configured to change the posture.

In the second embodiment, a configuration in which the operations of the plurality of biasing units 51 can be independently controlled has been described as an example. However, in a case where a plurality of biasing units are provided in the working aerial vehicle according to the present invention, a configuration in which the operations of the plurality of biasing units is collectively controlled may also be adopted.

In the above-described embodiments, a configuration in which the working aerial vehicle includes the aerial vehicle and the ejection device separate from the aerial vehicle has been described as an example. However, the working aerial vehicle according to the present invention may be formed such that the aerial vehicle and the ejection device are integrated together.

Regarding other configurations, it should be understood that the embodiments disclosed in the present specification are merely examples in all points and that the scope of the present invention is not limited thereto. Those skilled in the art can easily understand that appropriate modifications can be made without departing from the spirit of the present invention. Therefore, other embodiments modified without departing from the spirit of the present invention are also naturally included in the scope of the present invention.

### Industrial Applicability

The present invention can be used, for example, for seeding work in a field.

### Description of Reference Numerals

### [First Embodiment]

1: working aerial vehicle
2: aerial vehicle
3: ejection device
31: biasing unit
32: guide unit
33: storage unit
34: guide unit (modification example)

### [Second Embodiment]

4: working aerial vehicle
5: ejection device
51: biasing unit
52: guide unit
53: storage unit
54: power transmission device

## Claims

1. A working aerial vehicle, comprising:
an ejection device including at least one biasing unit configured to bias a material and at least one guide unit configured to guide the material biased by the at least one biasing unit in an ejection direction below an airframe,
wherein the ejection direction is changeable.

2. The working aerial vehicle according to claim 1, wherein the at least one guide unit is swingable.

3. The working aerial vehicle according to claim 2,
wherein the at least one biasing unit includes a plurality of biasing units, the at least one guide unit includes a plurality of guide units, and the ejection device includes the plurality of biasing units and the plurality of guide units, and
each of the plurality of guide units is independently swingable.

4. The working aerial vehicle according to claim 1,
wherein the at least one biasing unit includes a plurality of biasing units and the ejection device includes the plurality of biasing units, and
the ejection device is allowed to independently control operations of the plurality of biasing units.

5. The working aerial vehicle according to claim 1,
wherein the at least one guide unit includes a plurality of guide units and the ejection device includes the plurality of guide units having different directions in which the material is guided.

6. The working aerial vehicle according to any one of claims 1 to 4, wherein the ejection device is changeable between a storage posture in which the at least one guide unit is stored and a deployed posture in which the at least one guide unit is deployed.

7. The working aerial vehicle according to any one of claims 1 to 4, further comprising:
a rotor configured to generate lift,
wherein the working aerial vehicle specifies a degree of downwash generated by the rotor and determines at least one of the ejection direction and an ejection speed of the material in consideration of the degree of downwash.

8. The working aerial vehicle according to any one of claims 1 to 4, further comprising:
an aerial vehicle separate from the ejection device,
wherein the ejection device is connected to the aerial vehicle.

9. The working aerial vehicle according to claim 8, further comprising:
a storage unit configured to store the material and supply the material to the ejection device.

10. The working aerial vehicle according to any one of claims 1 to 4,
wherein the at least one guide unit includes a plurality of guide units, and
ejection directions of each material from the plurality of guide units are controllable to be substantially parallel.

11. The working aerial vehicle according to any one of claims 1 to 4, wherein the working aerial vehicle specifies a range that is a region in which a landing speed of the material is equal to or higher than a predetermined threshold value, and controls a path such that a point at which the material is to be landed is included in the range.

12. The working aerial vehicle according to any one of claims 1 to 4, wherein the material is an agricultural material.
